# EUROPÄISCHE PATENTSCHRIFT

(11) **EP 3 221 186 B1**
(45) Veröffentlichungstag und Bekanntmachung des Hinweises auf die Patenterteilung: **22.12.2021**
(21) Anmeldenummer: 15778267.3
(22) Anmeldetag: 07.10.2015
(51) Int. Cl.: B60Q 3/00, G02B 3/00, G02B 5/04, F21V 8/00, F21V 5/00, B60Q 3/10

(54) **BELEUCHTUNGSEINRICHTUNG**
LIGHTING APPARATUS
DISPOSITIF D'ÉCLAIRAGE

(30) Priorität: 06.11.2014 DE 102014116180
(43) Veröffentlichungstag der Anmeldung: 27.09.2017
(73) Patentinhaber: Lisa Dräxlmaier GmbH, 84137 Vilsbiburg (DE)
(72) Erfinder: WIMMER, Markus, 94437 Mamming (DE); LANG, Josef, 84036 Kumhausen (DE); ZAVIYALOV, Alexandr, 84036 Landshut (DE)
(86) Internationale Anmeldenummer: PCT/EP2015/073120
(87) Internationale Veröffentlichungsnummer: WO 2016/071063

(56) Entgegenhaltungen:
- EP-A1- 2 139 013
- CN-U- 203 036 552
- DE-A1-102007 056 402
- DE-A1-102010 031 192
- DE-A1-102012 018 517
- DE-A1-102012 107 082
- DE-A1-102013 016 842
- US-A1- 2002 145 797
- US-A1- 2005 140 860
- US-A1- 2006 285 312

## Beschreibung

### Technisches Gebiet

Die vorliegende Erfindung betrifft eine Beleuchtungseinrichtung für Fahrzeuginnenräume, insbesondere zur Erzeugung von 3D-Lichteffekten in Fahrzeuginnenräumen, eine Verwendung dieser Beleuchtungseinrichtung sowie ein Verfahren zur Herstellung einer solchen Beleuchtungseinrichtung.

### Stand der Technik

In der DE 10 2010 031 192 A1 wird eine Leuchtvorrichtung, insbesondere für Kraftfahrzeuge offenbart, bei der eine Anzeigefläche in unterschiedlicher Weise hinterleuchtet bzw. durchleuchtet wird.

Die Leuchtvorrichtung weist wenigstens zwei Lichtquellen auf. Dabei ist wenigstens eine Linsenanordnung aus mehreren, senkrecht zur Beabstandungsrichtung der Lichtquellen und zueinander parallel verlaufenden, in dieser Verlaufsrichtung gleichförmigen, fokussierenden Linsen vorgesehen. Außerdem umfasst die Leuchtvorrichtung eine auf der von den Lichtquellen abliegenden Seite der Linsenanordnung und in der Fokusebene der Linsen der Linsenanordnung angeordnete Schlitzmaske. Die Schlitzmaske hat wenigstens zwei Lichtdurchgangsschlitzen, auf die jeweils entweder Licht der einen oder Licht der anderen Lichtquelle fokussiert wird. Außerdem ist eine bildgebende Schicht vorgesehen, die wenigstens zwei dem jeweiligen Lichtdurchgangsschlitz zugeordnete, zu hinterleuchtende, streifenförmige Leuchtflächen aufweist, die jeweils eine Anzeigefläche definieren.

Die CN 203036552 U beschreibt eine Beleuchtungsvorrichtung mit einer transparenten Folie, einer gedruckten Schicht, einer Lichtquelle und einem Rahmen.

Eine Oberfläche der transparenten Folie weist konvexe lentikuläre Linsen, konkave lentikuläre Linsen oder ein halbkugelförmiges Mikrolinsenarray auf. Bei der Lichtquelle handelt es sich um eine flache und biegsame Lichtquelle. Durch die ebenen Fläche und biegsame Lichtquelle in Kombination mit einer hauptsächlich mit Digitaldruck bedruckten transparenten Folie um den Druck der Folie zu präsentieren. Durch die Linsen bzw. das Mikrolinsenarray wird dieser Druck dann ein dreidimensionaler Effekt verliehen.

Aus dem Stand der Technik sind Gewebematerialien bekannt, in denen transparente Kettfäden eingewebt und parallel angeordnet sind, so dass beim Durchstrahlen dieser Gewebe mit sichtbarem Licht ein dreidimensionaler Lichteffekt erzeugt wird. Zudem können die 3D-Lichteffekte in Abhängigkeit von der Position eines Betrachters zu dem Gewebe unterschiedlich wahrgenommen werden. Die erzeugten 3D-Lichteffekte beruhen auf der Wirkung der transparenten Kettfäden als Stablinsen, welche das durchtretende Licht entsprechend brechen. Betrachtungswinkelabhängige Darstellungsformen können auch durch sogenannte Parallaxbarrieren- und Linsenrastertechniken hervorgerufen werden. Durch eine gezielte Anordnung von Parallaxbarrieren bzw. Linsenelementen ergibt es sich, dass ein Betrachter je nach Blickwinkel verschiedene Teilbereiche von hinter den Barrieren oder Linsen liegenden (Bild-) Strukturen wahrnehmen kann. So kann zum Beispiel mit der Linsenrastertechnik zweidimensionalen Druckerzeugnissen eine dreidimensionale Tiefenwirkung verliehen oder auch der Anschein von Bewegungseffekten erzeugt werden.

Im Stand der Technik hingegen ist es noch nicht bekannt, dass 3D-Lichteffekte zur Effektbeleuchtung von Fahrzeuginnenräumen eingesetzt werden. Die oben beschriebenen Gewebe finden in erster Linie als gestalterische Elemente in der Architektur Anwendung. Diese Gewebe scheinen insbesondere zur Anwendung in Beleuchtungseinrichtungen für Fahrzeuginnenräume weniger geeignet. Dies liegt u.a. darin begründet, dass derartige Gewebe in der Regel nicht stabilisiert sind und sich die transparenten Kettenfäden durch Berührung einfach verschieben lassen und damit unter Umständen der Lichteffekt verloren geht. Weiter sind solche Gewebe nicht kaschierbar, da sie nicht 3D-verformbar sind und sich schon kleinste Verzüge negativ in dem Lichteffekt niederschlagen. Ferner werden fahrzeugspezifische Anforderungen, wie z.B. der "Fingernageltest" und "Sonnencremetest" durch solche Gewebe nicht erfüllt und die Erzeugung des 3D-Lichteffekts mittels flächigen Geweben benötigt einen vergleichsweise großen Bauraum.

### Darstellung der Erfindung

Aufgabe der vorliegenden Erfindung ist es, eine Beleuchtungseinrichtung vorzusehen, die 3D-Lichteffekte in Fahrzeuginnenräumen erzeugen kann und den spezifischen fahrzeugtechnischen Materialanforderungen gerecht wird.

Die Aufgabe wird durch die Merkmale des Anspruchs 1 gelöst. Vorteilhafte Ausführungen und Anwendungen finden sich in den diesbezüglichen abhängigen Ansprüchen, der folgenden Beschreibung und in den Zeichnungen.

Ferner ist eine Aufgabe der vorliegenden Erfindung, ein Verfahren zur Herstellung einer solchen Beleuchtungseinrichtung bereitzustellen. Diese Aufgabe wir durch die Merkmale des Anspruchs 17 gelöst.

Der vorliegenden Erfindung liegt der Gedanke zugrunde, dass sich "Ambiente-Beleuchtungen" zunehmend, insbesondere im automobilen Luxuselement, für Fahrzeuginnenräume durchsetzen. Bei der Weiterentwicklung dieser Technologie ist es daher wünschenswert, z.B. die in der Architektur verwendeten 3D-Lichteffekte auf Fahrzeuginnenräume übertragen und dort anwenden zu können. Dazu ist es jedoch erforderlich, dass entsprechende Beleuchtungseinrichtungen nicht nur dimensional fahrzeugtechnischen Erfordernissen gerecht werden, sondern auch in fahrzeugtechnischen Anwendungsgebieten zuverlässig und beständig einsetzbar sind. Es gilt hierbei, die gewünschten Beleuchtungseffekte über die gesamte Nutzungsdauer eines Fahrzeugs und in üblichen Einsatzszenarien sicherzustellen.

Die Beleuchtungseinrichtung für Fahrzeuginnenräume gemäß der vorliegenden Erfindung weist eine Lichtquelle auf, die sichtbares Licht emittiert und ein Bauteil, das so relativ zu der Lichtquelle angeordnet ist, dass es von dem durch die Lichtquelle emittierten Licht durchstrahlt bzw. durchlaufen wird. Das Bauteil weist ein transparentes Trägerteil, das eine Fläche aufweist, die von dem emittierten Licht der Lichtquelle durchlaufen wird und eine Linsenrasterstruktur (Lenticularstruktur) auf, die eine Vielzahl von periodisch angeordneten Linsenelementen aufweist und auf der Fläche des transparenten Trägerteils ausgebildet ist.

Unter den oben genannten Fahrzeuginnenräumen sind Innenräume von Land-, Wasser- und Luftfahrzeugen, sowie allgemein von sämtlichen Einrichtungen zur Personenbeförderung zu verstehen. Beispielhaft wird in der folgenden Beschreibung insbesondere auf Innenräume von Personenkraftfahrzeugen eingegangen, dies dient aber nur der Illustration und ist keineswegs als beschränkend auszulegen.

Die obige Lichtquelle ist bevorzugt so angeordnet, dass ihr Licht in Richtung des Bauteils ausgestrahlt wird und dieses Licht das transparente Trägerteil und die Linsenrasterstruktur durchstrahlt. Bevorzugt kann bei der erfindungsgemäßen Beleuchtungseinrichtung zwischen einer Vorderseite (Sichtseite) und einer Rückseite unterschieden werden. Dabei ist die Vorderseite diejenige Seite, die dem Betrachter/Insassen im Fahrzeuginnenraum zugewandt und somit sichtbar ist, wobei die Rückseite der Beleuchtungseinrichtung in der Regel im Fahrzeug verbaut und im eingebauten Zustand vom Fahrzeuginnenraum aus nicht sichtbar ist. Bezogen auf die obige Definition von Vorder- und Rückseite befindet sich die Lichtquelle auf der Rückseite der Beleuchtungseinrichtung und emittiert ihr Licht von der Rückseite zu der Vorderseite der Beleuchtungseinrichtung hin, so dass es von einem Betrachter/Insassen im Fahrzeuginnenraum entsprechend wahrgenommen werden kann.

Das von der Lichtquelle emittierte Licht ist sichtbares Licht, d.h., Licht, dass vom menschlichen Auge wahrgenommen werden kann. Folglich sind auch die Materialien und Strukturen des Trägerteils und der Linsenrasterstruktur auszuwählen und anzupassen, beispielhaft seien hier PMMA und PC als Materialien für das Trägerteil genannt. Das oben beschriebene Bauteil stellt einen besonders vorteilhaften Verbund aus Linsenrasterstruktur und Trägerteil bereit, der fahrzeugspezifischen Anforderungen gerecht wird. Für Fahrzeuge zur Personenbeförderung ist davon auszugehen, dass der überwiegende Teil von Einrichtungen im Innenraum Interaktionen mit den Insassen ausgesetzt ist und diesen entsprechend standhalten muss ohne an Funktionalität und Erscheinungsqualität einzubüßen. Durch das Aufbringen der Linsenrasterstruktur auf dem Trägerteil wird die entsprechende Stabilisierung der Linsenrasterstruktur und der erzeugten 3D-Lichteffekte erreicht. Die Lichteffekte können bei normaler Interaktion mit den Insassen somit nicht "zerstört" werden und sind auch beständig gegenüber üblicher Medieneinwirkung im Innenraum. Das Bauteil erfüllt damit auch die einschlägigen fahrzeugtechnischen (Oberflächen-) Normen, wie zum Beispiel den "Fingernageltest" und "Sonnencremetest" problemlos. Ferner ergibt sich eine wertige Bauteilhaptik und -optik, die besonders für das automobile Luxussegment geeignet ist, insbesondere, wenn Bauteilflächen noch mit weiteren Schichten versehen werden.

Die Lichtquelle ist bevorzugt eine punktartige Lichtquelle, ferner bevorzugt eine LED. Zur Darstellung flächenhafter 3D-Lichteffekte können mehrere Lichtquellen beliebig miteinander kombiniert und wie beschrieben auf der Rückseite der Beleuchtungseinrichtung angeordnet werden. LEDs sind vorteilhaft aufgrund ihrer langen Haltbarkeit, Robustheit, ihres geringen Energieverbrauchs sowie ihrer guten Steuerbarkeit und geringen Baugröße. Ferner ist es denkbar, LEDs verschiedener Farben miteinander zu kombinieren bzw. mehrfarbige LEDs zu verwenden, um 3D-Lichteffekte unterschiedlicher Farben und Lichtstimmungen zu erzeugen. Andere Lichtquellen bzw. Kombinationen mehrerer beliebiger Lichtquellen sind allerdings auch durch die vorliegende Erfindung umfasst, solange mit diesen entsprechende 3D-Lichteffekte erzeugt werden können.

Ferner ist es bevorzugt, dass die Linsenrasterstruktur auf einer, der Lichtquelle zugewandten Fläche des Trägerteils ausgebildet ist und/oder, dass die Linsenrasterstruktur auf einer der Lichtquelle abgewandten Fläche des Trägerteils ausgebildet ist. Selbstverständlich ist es auch möglich, die Linsenrasterstruktur nur auf einer lichtdurchlaufenen Seite des Trägerteils vorzusehen. Ferner muss auch nicht die gesamte lichtdurchlaufene Fläche des Trägerteils mit der Linsenrasterstruktur vorgesehen werden, sondern es kann auch genügen, nur Teilabschnitte davon mit einer Linsenrasterstruktur zu versehen. Die "zugewandte" Fläche des Trägerteils ist die Fläche, die der Lichtquelle unmittelbar gegenüberliegt und zugewandt ist. Angewandt auf den zuvor beschriebenen Einbau der Beleuchtungseinrichtung in ein Fahrzeug wäre das die Fläche des Trägerteils, die vom Innenraum des Fahrzeuges abgewandt ist und in Richtung der Lichtquelle und in Verbaurichtung der Beleuchtungseinrichtung zeigt. Die "abgewandte" Fläche des Trägerteils liegt der Lichtquelle nicht unmittelbar gegenüber, da zwischen ihr und der Lichtquelle noch zumindest die Dicke des Trägerteils liegt. Diese Fläche des Trägerteils zeigt somit in Richtung des Innenraums des Fahrzeugs und ist dem Betrachter/Insassen zugewandt, jedoch von der Lichtquelle selbst abgewandt. Durch das Aufbringen der Linsenrasterstruktur auf zwei gegenüberliegenden Flächen des transparenten Trägerteils, die nacheinander vom dem emittierten Licht der Lichtquelle durchlaufen werden, können die erhaltenen 3D-Lichteffekte entsprechend individueller Gestaltungswünsche angepasst werden, vorstellbar ist dabei die Erzeugung verschiedener Lichtmuster durch versetzte Überlagerung durch die zweite Linsenrasterstruktur.

Bei einem mehrseitigen Aufbringen der Linsenrasterstruktur kann es ferner vorteilhaft sein, dass die Linsenrasterstruktur auf zwei sich gegenüberliegenden Flächen des Trägerteils, die beide nacheinander von demselben Licht der Lichtquelle durchlaufen/durchstrahlt werden (z.B. zugewandte und abgewandte Fläche), angeordnet ist und diese Linsenrasterstrukturen in einer Querschnittrichtung des Bauteils lateral zueinander versetzt sind. Dies bedeutet, dass die Linsenrasterstrukturen in Durchstrahlungsrichtung des Lichts im Bauteilquerschnitt lateral zueinander versetzt sind, so dass die Scheitelpunkte der Außenkonturen der Linsenrasterelemente nicht auf einer gemeinsamen Achse senkrecht zum Trägerteil (Normale) liegen. Mit dieser Anordnung können noch vielfältigere Lichteffekte erzeugt werden. Im Sinne der vorliegenden Erfindung sollen also vielfältigste Gestaltungsmöglichkeiten des Bauteils umfasst sein. Wie bereits angedeutet, kann die Linsenrasterstruktur auf einer oder mehreren Flächen des Trägerteils und/oder vollständig oder teilweise auf den entsprechenden Flächen vorgesehen werden. Auch ist es möglich, unterschiedliche Linsenrasterstrukturen auf verschiedenen Flächen oder auf ein und derselben Fläche des Trägerteils miteinander zu kombinieren, um verschiedenste 3D-Lichteffekte zu erhalten.

Bei der erfindungsgemäßen Beleuchtungseinrichtung ist vorgesehen, dass auf der Linsenrasterstruktur zumindest teilweise eine Ausgleichsschicht zum Ausbilden einer ebenen Oberfläche aufgebracht ist und auf dieser Ausgleichsschicht eine weitere, von der Ausgleichsschicht verschiedene Schicht, zum Beispiel eine Dekorschicht ausgebildet, bevorzugt kaschiert ist. Dabei wird die bei Linsenrasterstrukturen häufig anzutreffende raue Oberfläche durch die Ausgleichsschicht so kompensiert, dass eine ebenmäßige Oberfläche entsteht, auf der wiederum andere Schichten aufgebracht werden können. Das Aufbringen dieser Schichten kann zum Beispiel durch Kaschieren des Bauteils erfolgen. Weder die Ausgleichsschicht, noch die darauf aufgebrachte Schicht sind in ihrer Art besonders begrenzt und richten sich nach den individuellen Anforderungen der Fahrzeuginnenräume, für welche die Beleuchtungseinrichtung vorgesehen ist. Lediglich ist sicherzustellen, dass durch die weiteren Schichten der 3D-Lichteffekt nicht übermäßig negativ beeinflusst wird. Die obige Ausführungsform mit den zusätzlichen Schichten bietet sich insbesondere dann an, wenn sich die Linsenrasterstruktur auf der Vorderseite/Sichtseite der Beleuchtungseinrichtung befindet.

Es ist ferner vorteilhaft, dass die Lichtquelle von der zu dieser am nächstgelegensten Linsenrasterstruktur einen Abstand von mindestens 5 mm aufweist. Die Wahl des Abstands von der Lichtquelle zu dem Bauteil der Beleuchtungsvorrichtung ist in dem Kontext von kompakter Baugröße und Implementierbarkeit in Fahrzeuginnenräumen sowie ausreichender Erzeugung und Darstellbarkeit der 3D-Lichteffekte vorzunehmen. Im Hinblick auf letzteres hat sich ein Mindestabstand von 5 mm als besonders vorteilhaft herausgestellt und führt zu einer akzeptablen Ausprägung von 3D-Lichteffekten bei gleichzeitig günstiger Baugröße der Beleuchtungseinrichtung. Mit zunehmendem Abstand von der Lichtquelle zur Linsenrasterstruktur prägen sich die Lichteffekte stärker aus, die erzeugten Lichtlinien sind länger und der Tiefeneffekt des Lichtmusters kommt besser zur Geltung. Der Maximalabstand zur Lichtquelle ergibt sich vornehmlich aus konstruktiven Beschränkungen, da die Beleuchtungseinrichtung i.d.R. kompakt verbaut werden soll und nur ein endlicher Bauraum zur Verfügung steht. Zwischen dem obigen Mindestabstand und dem hauptsächlich baulich bedingten Maximalabstand kann der Abstand der Lichtquelle zur Linsenrasterstruktur variiert werden. Beim Unterschreiten des Mindestabstandes x kann es zu einer zu fokussierten Beleuchtung des Bauteils kommen und der 3D-Lichteffekt erscheint zu lokalisiert bzw. zu schwach.

Es ist ferner bevorzugt, dass die Linsenrasterstruktur aus einer Linsenfolie oder Linsenbahn ausgebildet ist.

Es hat sich gezeigt, dass sich Linsenelemente, die eine Linienform aufweisen, am besten eignen um eine Linsenrasterstruktur auszubilden, die dreidimensionale Effekte erzeugt. Die Linsenelemente bilden also langgestreckte Gebilde aus und ihre Längenerstreckung übersteigt ihre Breitenerstreckung um ein Vielfaches. Als Folge ergibt sich ein entsprechendes Aspektverhältnis. Die Linien, die durch die Linsenelemente ausgebildet werden, können hierbei je nach gewünschtem Effekt gerade oder gewellt sein.

Die linienförmigen Linsenelemente weisen des Weiteren ein im Wesentlichen elliptisches oder parabolisches Querschnittsprofil auf, welches als Linse wirkt.

Das Querschnittsprofil hat eine konische Konstante für asphärische Linsen zwischen -0,5 und -1. Diese eignet sich besonders für die erfindungsgemäße Linsenrasterstruktur, da bei diesem Querschnittsprofil auch dreidimensionale Lichteffekte erzeugt werden können, wenn die Lichtquelle in nur geringem Abstand zur Linsenrasterstruktur angeordnet ist. Der Effekt kann zusätzlich verbessert werden, wenn das Querschnittsprofil einen Krümmungsradius von 75 bis 150 µm, bevorzugter 90 bis 110 µm aufweist.

Pro kreisbogenförmigem Element können sich noch weitere Querschnittsmaterialanteile ergeben, die im Inneren der Linsenrasterstruktur liegen und keine optische Grenzfläche ausbilden, d.h. ohne Brechungseffekte vom Licht durchlaufen werden und in erster Linie dem Zusammenhalt der kreisbogenförmigen Elemente dienen. In der Regel wird die Linsenrasterstruktur so auf dem Trägermaterial angeordnet, dass die Grenzfläche zwischen Trägermaterial und Linsenrasterstruktur nicht durch die kreisbogenförmigen Elemente, sondern durch die verbleibenden Querschnittsmaterialanteile ausgebildet wird. Damit ergibt sich eine kontinuierliche, unterbrechungsfreie optische Grenzfläche.

Die Linsenrasterstruktur kann des Weiteren Linsenelemente aufweisen, die sich in ihrer Form voneinander unterscheiden. So ist es beispielsweise möglich, dass die Linsenrasterstruktur einen ersten und einen zweiten Randabschnitt aufweist, in denen jeweils ein Linsenelement geradlinig ausgebildet ist. Es ist hierbei bevorzugt, dass die geradlinigen Linsenelemente gleichzeitig die äußersten Linsenelemente darstellen. Weiterhin kann es von Vorteil sein, wenn das geradlinige Linsenelement des ersten Randabschnitts parallel zum geradlinigen Linsenelement des zweiten Randabschnitts verläuft. Unter geradlinig kann in diesem Zusammenhang verstanden werden, dass das Linsenelement vollkommen gerade in seiner Längserstreckungsrichtung ausgeführt ist und keine Kurven oder Krümmungen aufweist. Zwischen dem ersten und zweiten Randabschnitt kann ein Mittelabschnitt angeordnet sein, der zumindest ein Linsenelement aufweist, das wellenförmig ausgebildet ist.

Um einen möglichst homogen wirkenden dreidimensionalen Lichteffekt zu erzeugen, ist es von Vorteil, wenn zwischen dem geradlinigen Linsenelement des jeweiligen Randabschnitts und dem wellenförmigen Linsenelement des Mittelabschnitts Übergangselemente angeordnet sind, die einen fließenden Übergang zwischen dem geradlinigen Linsenelement des jeweiligen Randabschnitts und dem wellenförmigen Linsenelement erzeugen. Hierzu können sich beispielsweise die Übergangselemente ausgehend von einem der linearen Linsenelemente mit jedem Übergangselement etwas mehr an die Form des wellenförmigen Linsenelement anpassen, so dass das Übergangselement, das direkt nehmen dem geradlinigen Linsenelement angeordnet ist, nahezu geradlinig verläuft, während ein Übergangselement, das direkt neben dem wellenförmigen Linsenelement angeordnet ist, nahezu die gleiche Wellenform beschreibt. Die Übergangselemente selbst können ebenfalls aus linienförmigen transparenten Linsenelementen ausgebildet sein.

Es ist von Vorteil, wenn die Abstände zwischen den Übergangselementen von einem der geradlinigen Linsenelemente bis zum wellenförmigen Linsenelement, insbesondere in einer Querschnittrichtung, die senkrecht zu dem geradlinigen Linsenelement verläuft, konstant sind. Gleichzeitig kann die Größe dieser konstanten Abstände über eine Längserstreckungsrichtung der Übergangselemente variieren. Auf diese Weise ist sichergestellt, dass keine Inhomogenitäten in den dreidimensionalen Lichteffekten auftreten, die durch die Linsenrasterstruktur erzeugbar sein sollen.

Des Weiteren ist es von Vorteil, wenn zumindest bereichsweise entlang einer Querschnittrichtung, die senkrecht zu den geradlinigen Linsenelementen des ersten und zweiten Randabschnitts verläuft, die Übergangselemente, die zwischen dem geradlinigen Linsenelement des ersten Randabschnitts und dem wellenförmigen Linsenelement des Mittelabschnitts angeordnet sind, einen geringeren Abstand zueinander aufweisen, als die Übergangselemente, die zwischen dem geradlinigen Linsenelement des zweiten Randabschnitts und dem wellenförmigen Linsenelement des Mittelabschnitts angeordnet sind.

Die Linsenrasterstruktur der vorliegenden Erfindung kann auch als Lenticularstruktur oder Lenticularoptik bezeichnet werden und ist als regelmäßig periodische Anordnung von Linsenelementen, insbesondere bei linien- oder wellenförmigen Linsenelementen zu verstehen. Zur Erzeugung eines 3D-Lichteffektes ist es insbesondere bevorzugt, dass die Linsenelemente in Querschnittrichtung periodisch, gleichmäßig aneinander angrenzend angeordnet sind. Solange dies gewährleistet ist, ist es auch vorstellbar, dass die einzelnen langgestreckten Linsenelemente in ihrer Längsrichtung nicht strikt linear, sondern beliebig geschwungen, auch kreisförmig verlaufen.

Bei periodisch, nebeneinander angrenzend angeordneten Linsenelementen ergibt sich dann der geschwungene Verlauf für das gesamte Kollektiv aus Linsenelementen (Linsenrasterstruktur). Somit sind auch komplexere Geometrien des Bauteils der Beleuchtungseinrichtung denkbar, ohne dass der 3D-Lichteffekt verloren gehen würde. Dies ist besonders vorteilhaft bei der Ausformung komplexer Innenraumbauteile für Personenkraftfahrzeuge, die i.d.R. nicht einfache plattenförmige Teile, sondern Teile komplexer 3D-Strukturen sind. Mit Vorteil weisen die obigen halbkreisförmigen Linsenelemente jeweils einen Mindestdurchmesser von etwa 100 µm auf, welcher eine gute Stabilität und Robustheit der einzelnen Linsenelemente sowie der Linsenrasterstruktur insgesamt gewährleistet und einen ausreichenden 3D-Lichteffekt sicherstellt. Die optionale Obergrenze des Durchmessers der Linsenelemente beträgt etwa 3 mm und bevorzugt erstreckt sich ein Durchmesserbereich von etwa 100 µm bis etwa 3 mm.

Es ist ferner vorteilhaft, dass die Linsenelemente voneinander verschiedene Durchmesser, bevorzugt gruppenweise verschiedene Durchmesser aufweisen. Durch gezielte Durchmesservariationen innerhalb der Linsenrasterstruktur oder zwischen verschiedenen Linsenrasterstrukturen können die 3D-Lichteffekte gezielt optimiert und verändert werden, um auch komplexe Lichtmuster darstellen zu können.

In Bezug auf die Herstellung des Bauteils der Beleuchtungseinrichtung ist es besonders vorteilhaft und preisgünstig das Bauteil im Wesentlichen in einem einzelnen Fertigungsschritt herzustellen. Dies kann zum Beispiel dadurch erfolgen, dass die Linsenrasterstruktur in ein Formwerkzeug zur Formgebung des Bauteils eingebracht bzw. eingepasst wird, anschließend das Material des transparenten Trägerteils dem Formwerkzeug zugeführt und entsprechend ausgeformt wird, wobei gleichzeitig, im Prinzip "in-situ", die Linsenrasterstruktur auf zumindest einer Fläche des transparenten Trägerteils ausgebildet wird. Bei Verwendung einer Linsenrasterstrukturfolie kann demnach ein Formwerkzeug zunächst mit der Folie ausgekleidet werden und dann das Trägermaterial mit dieser ausgekleideten Form ausgeformt werden, so dass sich ein Verbund des transparenten Trägerteils und der Linsenrasterfolie ergibt. Alternativ wäre es auch denkbar, dass die Linsenrasterstruktur in ein Material der Linsenrasterstruktur eingeprägt oder durch diverse Formgebungsverfahren darin eingebracht wird. Als mögliche Formgebungsverfahren seien hier Spritzguss- bzw. Spritzprägeprozesse genannt.

Abschließend umfasst die vorliegende Erfindung eine Verwendung der oben beschriebenen Beleuchtungseinrichtung für die Innenraumbeleuchtung von Land-, Wasser- und/oder Luftfahrzeugen bzw. generell Einrichtungen zur Personenbeförderung. Ferner ist es bevorzugt, die Beleuchtungseinrichtung in Cockpitstrukturen von Personenkraftfahrzeugen einzusetzen. Durch die Verwendung der Beleuchtungseinrichtung und des Bauteils sollen 3D-Lichteffekte zur "Ambiente-Beleuchtung" in Fahrzeuginnenräumen erzeugt werden, die durch einen Insassen wahrgenommen werden können und sich bevorzugt blickwinkelabhängig unterschiedlich darstellen.

### Kurze Beschreibung der Zeichnungen

- Fig. 1: stellt eine schematische Querschnittsansicht einer Beleuchtungseinrichtung dar.

- Fig. 2: stellt eine schematische Querschnittsansicht einer Beleuchtungseinrichtung gemäß der vorliegenden Erfindung dar.
- Fig. 3: stellt eine schematische Querschnittsansicht eines Bauteils einer Beleuchtungseinrichtung gemäß der vorliegenden Erfindung dar.
- Fig. 4: stellt eine schematische Querschnittsansicht einer Linsenrasterstruktur einer Beleuchtungseinrichtung gemäß der vorliegenden Erfindung dar.
- Fig. 5: stellt eine schematische Draufsicht auf eine Linsenrasterstruktur einer Beleuchtungseinrichtung gemäß der vorliegenden Erfindung dar.

### Wege zur Ausführung der Erfindung

Mit Bezug auf die beigefügten Zeichnungen werden nun bevorzugte Ausführungsformen der vorliegenden Erfindung beschrieben, wobei die Erfindung jedoch nicht auf diese beschränkt sein soll.

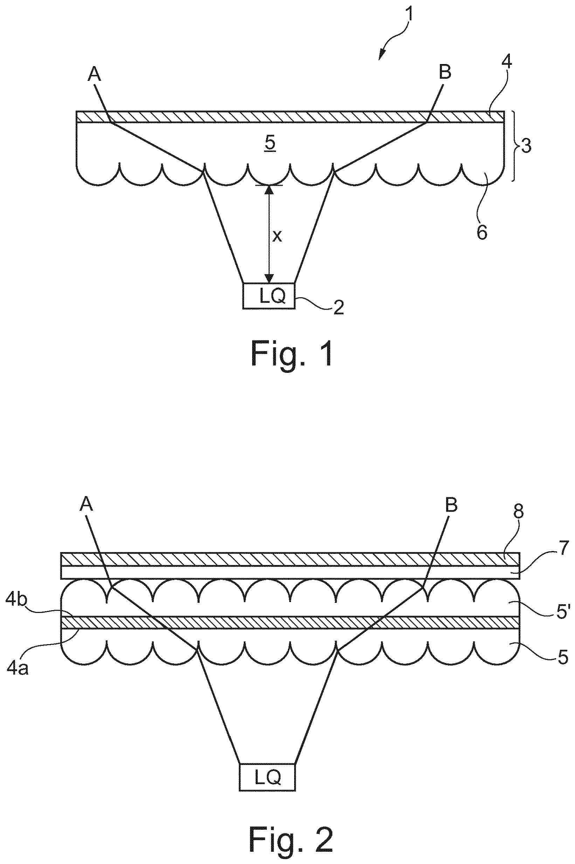

Fig. 1 zeigt ein Beispiel für eine Ausführungsform der obigen Beleuchtungseinrichtung 1 mit einer Lichtquelle 2 und einem Bauteil 3, das sich aus einem transparenten Trägerteil 4 und einer Linsenrasterstruktur 5 zusammensetzt. Die Linsenelemente 6 der Linsenrasterstruktur 5 sind durch halbkreisförmige Gebilde 6 entsprechend schematisch angedeutet. Aus Fig. 1 ist zu erkennen, dass die Lichtquelle 2 so angeordnet ist, dass ihr Licht in Richtung des Bauteils 3 zur Sichtseite hin ausgestrahlt wird und dieses Licht das transparente Trägerteil 4 und die Linsenrasterstruktur durchläuft bzw. durchstrahlt. Aus Fig. 1 ergibt sich ferner, dass es zur Erzeugung des 3D-Lichteffektes erforderlich ist, dass zumindest ein Teil des Lichtes die Linsenrasterstruktur durchläuft, die ein optisch wirksames Bauelement ist und das durch sie hindurchtretende Licht bricht und ablenkt. Beispielhaft sind dafür in Fig. 1 und Fig. 2 die schematischen Strahlengänge A und B eingezeichnet. Größte Lichtausbreitungen werden dabei senkrecht zur Längsrichtung der Linsenelemente (Linsenbahnen s. oben) erreicht. Der Mindestabstand der Lichtquelle ist in Fig. 1 durch das Bezugszeichen x illustriert. In diesem Beispiel ist die Linsenrasterstruktur 5 auf der der Lichtquelle 2 zugewandten Seite des transparenten Trägerteils 4 die nächstgelegenste Linsenrasterstruktur 5.

Fig. 2 illustriert einen weiteren Aspekt der Beleuchtungseinrichtung, wonach die Linsenrasterstruktur 5 mehrseitig bzw. beidseitig auf dem Trägerteil 4 ausgebildet ist. Dies ist in Fig. 2 dadurch angedeutet, dass das Trägerteil 4 die Linsenrasterstruktur 5 bzw. 5' aufweist. Diese beiden Linsenrasterstrukturen 5, 5' werden nacheinander von der Rückseite zu der Sichtseite der Beleuchtungseinrichtung 1 durchstrahlt und leisten je einen Beitrag zur Modifikation dieses Lichts. Zum besseren Verständnis der zuvor eingeführten Begriffe "abgewandte" und "zugewandte" Fläche des Trägerteils 4 sind in Fig. 2 ferner die Bezugszeichen 4a und 4b angegeben. Die zugewandte Fläche des Trägerteils 4 ist dabei die Fläche 4a, die der Lichtquelle 2 unmittelbar gegenüberliegt. Die Fläche 4b des Trägerteils liegt der Lichtquelle hingegen nicht unmittelbar gegenüber, da zwischen ihr und der Lichtquelle noch die Dicke des Trägerteils 4 liegt. Die Fläche 4b zeigt in Richtung des Innenraums des Fahrzeugs und ist dem Betrachter/Insassen zugewandt, jedoch von der Lichtquelle 2 abgewandt.

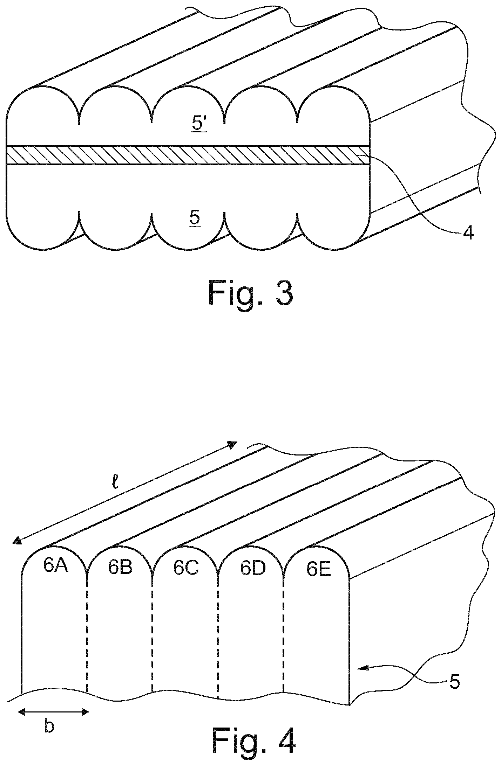

Fig. 2 und Fig. 3 zeigen schematisch, dass die beidseitig vorgesehenen Linsenrasterstrukturen 5 und 5' in Querschnittrichtung des Bauteils 3 deckungsgleich angeordnet sind. Das bedeutet, dass die darin gezeigten halbkreisförmigen Linsenelemente in einer Richtung senkrecht zum Bauteil 3 so lateral zueinander ausgerichtet sind, dass die Halbkreise der Linsenelemente auf beiden Seiten ohne das dazwischen liegende Trägerteil 4 einen vollständigen Kreis ausbilden würden. Die vorliegende Erfindung umfasst allerdings auch, dass die Linsenrasterstrukturen nicht deckungsgleich sind und zum Beispiel die halbkreisförmigen Linsenelemente in Querschnittrichtung des Bauteils 3 lateral so zueinander versetzt sind, dass kein exakter Kreis entstehen würde. In anderen Worten, die Scheitelpunkte der äußeren Konturen der Linsenelemente würden nicht auf einer gemeinsamen Normale des Bauteils 3 liegen.

Fig. 2 illustriert ebenfalls das Vorsehen einer Ausgleichsschicht 7 auf der Linsenrasterstruktur, um die oft raue Oberfläche dieser auszugleichen und um beispielsweise eine Dekorschicht 8 aufbringen zu können. Das Vorsehen des Trägermaterials auf der Linsenrasterstruktur 5 im Sinne der Anordnung der Ausgleichsschicht 7 wie in Fig. 2 illustriert, d.h. auf den kreisbogenförmigen Elementen, ist nicht vorgesehen. Wie oben beschrieben, soll nämlich eine homogene, kontinuierliche optische Grenzfläche zwischen Trägerteil 4 und Linsenrasterstruktur ausgebildet werden, was durch die Rauigkeit der äußeren Oberfläche der Linsenrasterstruktur nicht möglich wäre.

Fig. 4 zeigt eine perspektivische Querschnittansicht einer Linsenrasterstruktur 5 mit den einzelnen Linsenelementen 6A bis 6E, die in Querschnittrichtung lateral angrenzend aneinander, durchgehend angeordnet sind. Weiter lässt die perspektivische Ansicht in Fig. 3 und Fig. 4 erkennen, dass die Linsenelemente 6A-6E langgestreckte Gebilde darstellen. Das heißt, ihre Längenerstreckung l übersteigt ihre Breitenerstreckung b um ein Vielfaches. Wie oben beschrieben, müssen diese langgestreckten Gebilde entlang l auch nicht streng linear verlaufen, sondern können gekrümmt sein und auch kreisförmig verlaufen. Besonders bevorzugt ist es jedoch, dass die Linsenelemente 6A bis 6E lateral, d.h. in Querschnittrichtung entlang b, lückenlos aneinander angrenzen und sich kontinuierlich erstrecken.

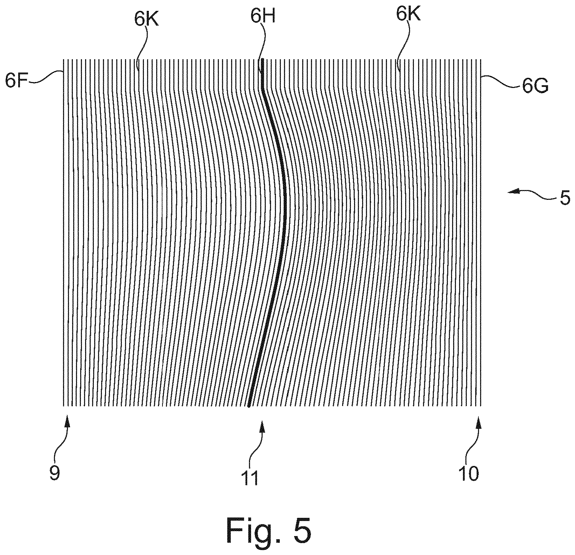

Fig. 5 zeigt eine schematische Darstellung der Linsenrasterstruktur 5 in einer Draufsicht. Die Linsenelemente 6 sind hierbei als Linien dargestellt. Über die gesamte Fläche der Linsenrasterstruktur 5 ist eine Vielzahl von Linsenelementen 6 angeordnet, die sich in ihrer Form voneinander unterscheiden. Des Weiteren setzt sich die Linsenrasterstruktur 5 aus einem ersten und einem zweiten Randabschnitt 9, 10 zusammen. Zwischen den Randabschnitten 9, 10 ist ein Mittelabschnitt 11 angeordnet. Der erste und zweite Randabschnitt 9, 10 besitzen jeweils ein geradliniges Linsenelement 6F, 6G, die gleichzeitig auch die äußersten Linsenelemente 6 der Linsenrasterstruktur 5 darstellen. Der Mittelabschnitt 11 besitzt hingegen ein wellenförmiges Linsenelement 6H. Zur besseren Übersicht wurden sowohl das wellenförmige Linsenelement 6H als auch die geradlinigen Linsenelemente 6F und 6G durch dickere Linien hervorgehoben.

Um einen fließenden Übergang zwischen dem wellenförmigen Linsenelement 6H und den geradlinigen Linsenelementen 6F, 6G zu erzeugen, sind Übergangselemente 6K auf der Linsenrasterstruktur 5 angeordnet. Ausgehend von den geradlinigen Linsenelementen 6F, 6G nähert sich jedes Übergangselement 6K etwas mehr der Form des wellenförmigen Linsenelements 6H an. Durch diesen Übergang von einer geradlinigen zu einer gewellten Form der Linsenelemente 6, wird ein besonders starker dreidimensionaler Effekt erzeugt, sofern eine Lichtquelle hinter der Linsenrasterstruktur 5 angeordnet wird. Dieser Effekt ist bereits sichtbar, wenn die Lichtquelle in nur geringem Abstand zur Linsenrasterstruktur angeordnet ist. Weiterhin wird das einfallende Licht stark verteilt, so dass auch bei einer dichten Anordnung einer Lichtquelle an der Linsenrasterstruktur keine Lichtinhomogenitäten auftreten.

Die Übergangselemente 6K, die zwischen dem jeweiligen geradlinigen Linsenelement 6F, 6G und dem wellenförmigen Linsenelement 6H angeordnet sind, sind in einer Querschnittrichtung, die senkrecht zu den geradlinigen Linsenelementen 6F, 6G verläuft, in konstanten Abständen zueinander angeordnet. In Längsrichtung ändert sich jedoch die Größe dieses konstanten Abstandes. Weiterhin sind die Übergangselemente 6K, die zwischen dem geradlinigen Linsenelement 6F des ersten Randabschnitts 9 und dem wellenförmigen Linsenelement 6H des Mittelabschnitts 11 angeordnet sind, in einem anderen konstanten Abstand angeordnet als die Übergangselemente 6K, die zwischen dem geradlinigen Linsenelement 6G des zweiten Randabschnitts 10 und dem wellenförmigen Linsenelement 6H des Mittelabschnitts 11 angeordnet sind.

### Bezugszeichenliste

- 1.: Beleuchtungseinrichtung
- 2.: Lichtquelle
- 3.: Bauteil
- 4.: Trägerteil
- 5.: Linsenrasterstruktur
- 6.: Linsenelement
- 7.: Ausgleichsschicht
- 8.: Dekorschicht
- 9.: Erster Randabschnitt
- 10.: Zweiter Randabschnitt
- 11.: Mittelabschnitt

## Patentansprüche

1. Beleuchtungseinrichtung (1) für Fahrzeuginnenräume, mit:
einer Lichtquelle (2), die sichtbares Licht emittiert; und
einem Bauteil (3), das so relativ zu der Lichtquelle (2) angeordnet ist, dass es von dem durch die Lichtquelle (2) emittierten Licht durchstrahlt wird, aufweisend:
ein transparentes Trägerteil (4), das eine Fläche aufweist, die von dem emittierten Licht der Lichtquelle (2) durchlaufen wird; und eine Linsenrasterstruktur (5), die eine Vielzahl von periodisch angeordneten Linsenelementen (6A - 6K) aufweist und auf der Fläche des transparenten Trägerteils (4) ausgebildet ist, **dadurch gekennzeichnet, dass**
auf der Linsenrasterstruktur (5) zumindest teilweise eine Ausgleichsschicht (7) zum Ausbilden einer ebenen Oberfläche ausgebildet ist; und auf dieser Ausgleichsschicht (7) ferner eine weitere, von der Ausgleichsschicht (7) verschiedene Schicht ausgebildet ist.

2. Beleuchtungseinrichtung (1) nach Anspruch 1, bei der die zumindest eine Lichtquelle (2) eine punktartige Lichtquelle (2), bevorzugt eine LED ist.

3. Beleuchtungseinrichtung (1) nach einem der vorhergehenden Ansprüche, bei der eine Linsenrasterstruktur (5) auf einer, der Lichtquelle (2) zugewandten Fläche des Trägerteils (4) ausgebildet ist.

4. Beleuchtungseinrichtung (1) nach einem der vorhergehenden Ansprüche, bei der die Linsenrasterstruktur (5) auf einer der Lichtquelle (2) abgewandten Fläche des Trägerteils (4) ausgebildet ist.

5. Beleuchtungseinrichtung (1) nach einem der vorhergehenden Ansprüche, bei der die Linsenrasterstruktur (5) auf zwei sich gegenüberliegenden Flächen des Trägerteils (4), die beide nacheinander von demselben Licht der Lichtquelle (2) durchlaufen werden, angeordnet ist; und bevorzugt die Linsenrasterstrukturen (5) in einer Querschnittrichtung des Bauteils (3) lateral zueinander versetzt sind.

6. Beleuchtungseinrichtung (1) nach einem der vorhergehenden Ansprüche, bei der die von der Ausgleichsschicht (7) verschiedene Schicht, bevorzugt eine Dekorschicht, kaschiert ist.

7. Beleuchtungseinrichtung (1) nach einem der vorhergehenden Ansprüche, bei der die Lichtquelle (2) von der zu dieser am nächstgelegensten Linsenrasterstruktur (5) einen Abstand von mindestens 5 mm aufweist.

8. Beleuchtungseinrichtung (1) nach einem der vorhergehenden Ansprüche, wobei die Linsenrasterstruktur (5) aus einer Linsenrasterfolie oder -bahn ausgebildet ist.

9. Beleuchtungseinrichtung (1) nach einem der vorhergehenden Ansprüche, wobei die Linsenelemente (6A - 6K) eine Linienform aufweisen.

10. Beleuchtungseinrichtung (1) nach dem vorhergehenden Anspruch, wobei die Linsenelemente (6A - 6K) ein im Wesentlichen halbkreisförmiges, insbesondere parabolisches, hyperbolisches oder elliptisches Querschnittprofil aufweisen.

11. Beleuchtungseinrichtung (1) nach dem vorhergehenden Anspruch, wobei das Querschnittprofil einen Krümmungsradius von 75 bis 150 µm, bevorzugter 90 bis 110 µm aufweist.

12. Beleuchtungseinrichtung (1) nach einem der Ansprüche 10 bis 11, wobei das Querschnittprofil eine konische Konstante zwischen -0,5 und -1 aufweist.

13. Beleuchtungseinrichtung (1) nach einem der vorhergehenden Ansprüche, wobei die Linsenrasterstruktur (5) zumindest einen ersten und einen zweiten Randabschnitt (9, 10) aufweist, die sich gegenüberliegen und jeweils zumindest ein geradliniges Linsenelement (6F, 6G) aufweisen, wobei zwischen den beiden Randabschnitten (9, 10) ein Mittelabschnitt (11) angeordnet ist, der zumindest ein wellenförmiges Linsenelement (6H) aufweist.

14. Beleuchtungseinrichtung (1) nach dem vorhergehenden Anspruch, wobei zwischen dem jeweiligen geradlinigen Linsenelement (6F, 6G) und dem wellenförmigen Linsenelement (6H) Übergangselemente (6K) angeordnet sind, die einen fließenden Übergang zwischen dem jeweiligen geradlinigen Linsenelement (6F, 6G) und dem wellenförmigen Linsenelement (6H) erzeugen.

15. Beleuchtungseinrichtung (1) nach dem vorhergehenden Anspruch, wobei Abstände zwischen den Übergangselementen (6K) konstant sind, während die Abstände über eine Längserstreckung der Übergangselemente (6K) variieren.

16. Verwendung der Beleuchtungseinrichtung (1) nach einem der Ansprüche 1 bis 15 für die Innenraumbeleuchtung von Fahrzeugen; wobei dreidimensionale Lichteffekte erzeugt werden, die durch einen Betrachter/Insassen in dem Innenraum betrachtungswinkelabhängig unterschiedlich wahrnehmbar sind.

17. Verfahren zur Herstellung einer Beleuchtungseinrichtung (1) mit einem Bauteil (3) nach einem der Ansprüche 1 bis 15, mit den Schritten:
Einbringen der Linsenrasterstruktur (5) in ein Formwerkzeug zur Formgebung des Bauteils (3);
Zuführen des Materials des transparenten Trägerteils (4) in das Formwerkzeug; und
Ausformen des Materials des Trägerteils (4), wobei gleichzeitig die Linsenrasterstruktur (5) auf zumindest einer Fläche des transparenten Trägerteils (4) ausgebildet wird;
Anbringen auf der Linsenrasterstruktur (5) zumindest teilweise einer Ausgleichsschicht (7) zum Ausbilden einer ebenen Oberfläche; und
Anbringen auf dieser Ausgleichsschicht (7) ferner einer weiteren, von der Ausgleichsschicht (7) verschiedenen Schicht, bevorzugt einer Dekorschicht, bevorzugt durch Kaschieren des Bauteils.

## Claims

1. Lighting device (1) for vehicle interiors, having:
a light source (2) that emits visible light; and
a component (3) disposed relative to the light source (2) such that it transmits the light emitted by the light source (2), having:
a transparent carrier portion (4) having a face through which the light emitted by the light source (2) passes; and a lens array structure (5) having a multitude of lens elements (6A-6K) in periodic arrangement and formed on the face of the transparent carrier portion (4),
**characterized in that**
a compensation layer (7) for forming a flat surface is formed over at least part of the lens array structure (5); and a further layer other than the compensation layer (7) is also formed atop said compensation layer (7).

2. Lighting device (1) according to Claim 1, in which the at least one light source (2) is a point light source (2), preferably an LED.

3. Lighting device (1) according to either of the preceding claims, in which a lens array structure (5) is formed on a face of the carrier portion (4) that faces toward the light source (2).

4. Lighting device (1) according to any of the preceding claims, in which the lens array structure (5) is formed on a face of the carrier portion (4) that faces away from the light source (2).

5. Lighting device (1) according to any of the preceding claims, in which the lens array structure (5) is disposed on two opposite faces of the carrier portion (4), through both of which the same light from the light source (2) passes successively; and the lens array structures (5) are preferably offset laterally to one another in a cross-sectional direction of the component (3).

6. Lighting device (1) according to any of the preceding claims, in which the layer other than the compensation layer (7), preferably a decorative layer, is laminated.

7. Lighting device (1) according to any of the preceding claims, in which the light source (2) has a distance of at least 5 mm from the closest lens array structure (5) .

8. Lighting device (1) according to any of the preceding claims, wherein the lens array structure (5) is formed from a lens array film or sheet.

9. Lighting device (1) according to any of the preceding claims, wherein the lens elements (6A-6K) have a linear form.

10. Lighting device (1) according to the preceding claim, wherein the lens elements (6A-6K) have an essentially semicircular, especially parabolic, hyperbolic or elliptical, cross-sectional profile.

11. Lighting device (1) according to the preceding claim, wherein the cross-sectional profile has a radius of curvature of 75 to 150 µm, more preferably 90 to 110 µm.

12. Lighting device (1) according to either of Claims 10 and 11, wherein the cross-sectional profile has a conical constant between -0.5 and -1.

13. Lighting device (1) according to any of the preceding claims, wherein the lens array structure (5) has at least one first and one second edge section (9, 10) that lie opposite one another and each have at least one rectilinear lens element (6F, 6G), with a middle section (11) having at least one wavy lens element (6H) being disposed between the two edge sections (9, 10) .

14. Lighting device (1) according to the preceding claim, wherein transition elements (6K) disposed between the respective rectilinear lens element (6F, 6G) and the wavy lens element (6H) generate a fluid transition between the respective rectilinear lens element (6F, 6G) and the wavy lens element (6H).

15. Lighting device (1) according to the preceding claim, wherein distances between the transition elements (6K) are constant, with varying distances over a longitudinal extent of the transition elements (6K).

16. Use of the lighting device (1) according to any of Claims 1 to 15 for interior lighting of vehicles; wherein three-dimensional light effects that are differently perceivable dependent on the viewing angle by an observer/occupant in the interior are generated.

17. Process for producing a lighting device (1) having a component (3) according to any of Claims 1 to 15, having the steps of:
introducing the lens array structure (5) into a mould for shaping of the component (3);
feeding the material for the transparent carrier portion (4) into the mould; and
shaping the material for the carrier portion (4), with simultaneous formation of the lens array structure (5) on at least one face of the transparent carrier portion (4);
applying a compensation layer (7) for formation of a flat surface to at least part of the lens array structure (5); and
also applying a further layer other than the compensation layer (7) atop said compensation layer (7), preferably a decorative layer, preferably by laminating the component.

## Revendications

1. Dispositif d'éclairage (1) destiné à des habitacles de véhicule, ledit dispositif comprenant :
une source de lumière (2) qui émet de la lumière visible ; et
un composant (3) qui est disposé par rapport à la source de lumière (2) de manière à être traversé par la lumière émise par la source de lumière (2), ledit composant comportant : une partie support transparente (4) qui comporte une surface qui est traversée par la lumière émise par la source de lumière (2) ; et une structure gaufrée (5) qui comporte une pluralité d'éléments lenticulaires (6A-6K) disposés périodiquement et qui est formée sur la surface de la partie support transparente (4),
**caractérisé en ce que**
une couche de compensation (7) destinée à former une surface plane est formée au moins partiellement sur la structure gaufrée (5) ; et une autre couche, différente de la couche de compensation (7), est également formée sur cette couche de compensation (7).

2. Dispositif d'éclairage (1) selon la revendication 1, dans lequel l'au moins une source de lumière (2) est une source de lumière ponctuelle (2), de préférence une LED.

3. Dispositif d'éclairage (1) selon l'une des revendications précédentes, dans lequel une structure gaufrée (5) est formée sur une surface de la partie support (4) qui est dirigée vers la source de lumière (2) .

4. Dispositif d'éclairage (1) selon l'une des revendications précédentes, dans lequel la structure gaufrée (5) est formée sur une surface de la partie support (4) qui est dirigée à l'opposé de la source de lumière (2).

5. Dispositif d'éclairage (1) selon l'une des revendications précédentes, dans lequel la structure gaufrée (5) est disposée sur deux surfaces opposées de la partie support (4) qui sont toutes les deux traversées l'une après l'autre par la même lumière de la source de lumière (2) ; et de préférence les structures gaufrées (5) sont décalées latéralement les unes des autres dans une direction transversale du composant (3).

6. Dispositif d'éclairage (1) selon l'une des revendications précédentes, dans lequel la couche, différente de la couche de compensation (7), de préférence une couche décorative, est contrecollée.

7. Dispositif d'éclairage (1) selon l'une des revendications précédentes, dans lequel la source de lumière (2) est à une distance d'au moins 5 mm de la structure gaufrée (5) la plus proche d'elle.

8. Dispositif d'éclairage (1) selon l'une des revendications précédentes, la structure gaufrée (5) étant formée à partir d'une feuille ou d'une bande gaufrée.

9. Dispositif d'éclairage (1) selon l'une des revendications précédentes, les éléments lenticulaires (6A-6K) ayant une forme de ligne.

10. Dispositif d'éclairage (1) selon la revendication précédente, les éléments lenticulaires (6A-6K) ayant un profil en coupe transversale sensiblement semi-circulaire, en particulier parabolique, hyperbolique ou elliptique.

11. Dispositif d'éclairage (1) selon la revendication précédente, le profil en coupe transversale ayant un rayon de courbure de 75 à 150 µm, plus préférablement de 90 à 110 µm.

12. Dispositif d'éclairage (1) selon l'une des revendications 10 à 11, le profil en coupe transversale ayant une constante conique comprise entre -0,5 et -1.

13. Dispositif d'éclairage (1) selon l'une des revendications précédentes, la structure gaufrée (5) comportant au moins une première et une deuxième portion de bord (9, 10) qui se font face et qui comportent chacune au moins un élément lenticulaire rectiligne (6F, 6G), une portion médiane (11), qui comporte au moins un élément lenticulaire ondulé (6H), étant disposée entre les deux portions de bord (9, 10).

14. Dispositif d'éclairage (1) selon la revendication précédente, des éléments de transition (6K) étant disposés entre l'élément lenticulaire rectiligne respectif (6F, 6G) et l'élément lenticulaire ondulé (6H) et générant une transition douce entre l'élément lenticulaire rectiligne respectif (6F, 6G) et l'élément lenticulaire ondulé (6H).

15. Dispositif d'éclairage (1) selon la revendication précédente, les distances entre les éléments de transition (6K) étant constantes, tandis que les distances varient sur une extension longitudinale des éléments de transition (6K).

16. Utilisation du dispositif d'éclairage (1) selon l'une des revendications 1 à 15 destiné à l'éclairage d'habitacles de véhicules ; des effets lumineux tridimensionnels étant générés qui peuvent être perçus différemment en fonction de l'angle de vision par un observateur/occupant se trouvant dans l'habitacle.

17. Procédé de fabrication d'un dispositif d'éclairage (1) comprenant un composant (3) selon l'une des revendications 1 à 15, ledit procédé comprenant les étapes suivantes :
introduire la structure gaufrée (5) dans un outil de formage destiné à mettre en forme le composant (3) ;
amener la matière de la partie support transparente (4) jusque dans l'outil de formage ; et
mettre en forme la matière de la partie support (4), la structure gaufrée (5) étant formée en même temps sur au moins une surface de la partie support transparente (4) ;
appliquer au moins partiellement une couche de compensation (7) sur la structure gaufrée (5) pour former une surface plane ; et
appliquer une couche supplémentaire différente de la couche de compensation (7), de préférence une couche décorative, de préférence par contrecollage du composant, sur cette couche de compensation (7).
